# EUROPEAN PATENT SPECIFICATION

(11) **EP 1 834 852 B1**
(45) Date of publication and mention of the grant of the patent: **28.10.2009**
(21) Application number: 07104324.4
(22) Date of filing: 16.03.2007
(51) Int. Cl.: B60T 7/20

(54) **Brake operating mechanism**
Bremsenbetriebsmechanismus
Mécanisme de fonctionnement de frein

(30) Priority: 17.03.2006 NL 1031394
(43) Date of publication of application: 19.09.2007
(73) Proprietor: Reich KG, 35713 Eschenburg-Wissenbach (DE)
(72) Inventor: Beijersbergen van Henegouwen, Cornelis Martin, 5314 AP, Bruchem (NL); Bender, Helmuth, 35713 Eschenburg (DE); Bender, Steffen, 35713 Eschenburg (DE); Staats, Kees Jan, 6721 XX, Bennekom (NL)
(74) Representative: van Westenbrugge, Andries

(56) References cited:
- EP-A- 0 587 217
- EP-A2- 0 319 970
- GB-A- 1 283 063
- GB-A- 2 362 693
- GB-A- 2 374 389

## Description

The present invention relates to a brake operating mechanism for operating a brake according to the preamble of Claim 1. A brake operating mechanism of this type is known from EP 0587217 A1. The use of brakes is mandatory with various kinds of relatively heavy-weight trailers, such as caravans. Generally, overrun brakes are used comprising a mechanism arranged in the pole of the vehicle. The pole to be connected to the towing hook comprises two parts which can be displaced relative to one another and are pushed apart by spring force. During braking, these parts move towards one another, thus generating a tensile force in the brake cables leading to the respective wheels to which the brakes are fitted.

It has been found that such a brake mechanism does not always work satisfactorily. Usually, the first braking action only takes place at a very late stage. In addition, a braking action of this type is seen as jerky and unpleasant by the driver. Therefore and for many other reasons, a brake operating mechanism has been proposed which engages the overrun brake. Depending on other signals, the overrun brake is subsequently actuated. One of these signals is the first touching of the brake pedal which results in the brake lights being activated.

It has been found that a brake operating mechanism of this type works extremely well. However, in practice, it was found that it is not possible to completely ensure that such a brake operating mechanism does not become operative in any circumstances where braking is no longer necessary. This has consequently resulted in problems in practice because the brakes of the trailer are continually being (partially) operated, resulting in overheating. This overheating is hardly registered by the driver, or not at all, as a result of which considerable damage has been caused to braking systems and safety has been compromised.

It has been proposed in the prior art to ensure that the brake operating mechanism always returns to its non-operative state by means of springs. In this case, the problem arises that an extremely heavy-duty electric motor is required in order to effect braking as the respective spring force then also has to be overcome. A quick response time of the brake operating mechanism can then no longer be guaranteed, and this is exactly one of the features which makes such a brake operating mechanism so attractive as an addition to the existing overrun brake.

In EP 0587217 A1, the brake operating mechanism is realised in that the power supply comprises a pressurized fluid, a buffer store is provided for this fluid, the actuator being fluid-operated and embodied such that it assumes a non-operative position when there is no fluid pressure, a fluid duct extending between this actuator and the buffer store in which a valve is present which is controlled by a control unit.

It is the object of the present invention to provide a brake operating mechanism which not only makes highly sensitive control possible, but which also ensures that the brake operating mechanism under all circumstances returns to the starting position, that is to say non-operative position, if braking is no longer desired.

This object is achieved by means of a brake operating mechanism having the features of Claim 1.

According to the invention, a throttle opening is provided downstream of the brake valve. On the one hand, the dimensions of this throttle opening are so small that leakage occurring therethrough when the brake valve is operated does not have a substantial effect on the operation of the actuator. The flow of fluid from the buffer store is so great that a small leak through a throttle opening is negligible. On the other hand, the dimensions of this opening are sufficiently large for it to be larger than the (effective) capacity of the fluid pump used. This means that when the control unit and/or various valves mentioned above fail completely, the system will slowly drain as the pump capacity is smaller than the drain capacity of the throttle opening, thus leading to a gradual emptying of the buffer store, following which no residual braking force remains.

In addition, such a system prevents braking by means of the overrun brakes over a prolonged time.

According to the present invention, use is made of fluid stored in a buffer store at elevated pressure in order to operate the actuator. That is to say that the pressure in the buffer store can gradually be increased to the desired pressure using a pump. This pump may be present either on the towing vehicle or on the towed vehicle. When braking takes place, the control unit only operates a brake valve which only requires little electrical power. By operating a brake valve of this type, the considerable energy stored in the buffer store can be used in order to operate the actuator. The latter can be active very quickly and a decent return spring or the like may be fitted in the actuator in order to ensure that the actuator returns to the non-operative position under all circumstances when the pressure from the buffer store is no longer active.

The fluid used may comprise a liquid or gas. If a gas is used, then, according to an advantageous embodiment, this gas is air. A simple air pump may be used to pressurize the buffer store. Such an air pump may, for example, be present in the towed vehicle and be of very compact design. After all, it only takes a relatively small capacity in order to pressurize the buffer store tank for a prolonged period of time. The control unit may be provided with sensors for monitoring the pressure and subsequently operating the air pump.

The brake valve is preferably embodied so as to be normally closed. This provides a further safety mechanism as fluid can only be moved to the actuator when it is electrically driven. According to a further advantageous embodiment, a further valve is located downstream of the brake valve which, in the non-operative state, is in the open position. It is only moved into a closed position by the control unit when the actuator is operated. This is a further safety mechanism, which ensures that, in case of a possible failure, there can never be any residual pressure downstream of the brake valve when the latter is not being operated.

As indicated above, the control unit may become active when the brake lights are activated by operating the brake pedal. Other possibilities are measuring the deceleration using a G sensor or measuring the displacement between the pole parts using a displacement sensor.

The present invention also relates to a trailer provided with a brake operating mechanism as described above, wherein this brake operating mechanism engages on the brake rod which extends between the two pole parts.

The invention will be described below with reference to an exemplary embodiment illustrated in the drawing, in which:
Fig. 1 diagrammatically shows a side view of a caravan provided with the brake operating mechanism according to the invention;
Fig. 2 shows a detail II from Fig. 1; and
Fig. 3 diagrammatically shows the brake operating mechanism according to the present invention.

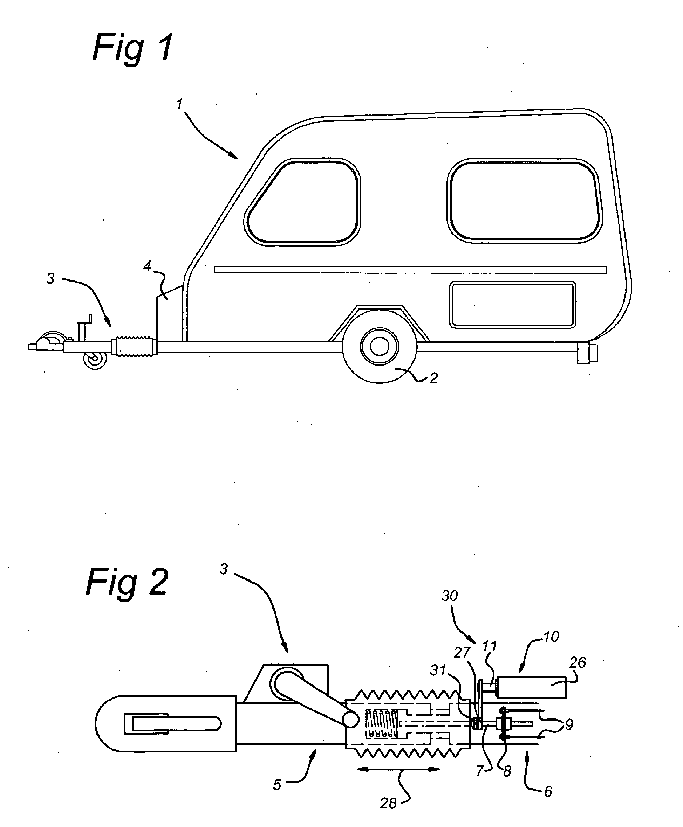

In Fig. 1, a caravan is denoted by reference numeral 1. It is provided with wheels 2 which are provided with brakes which are not shown in any more detail. These brakes are designed as so-called overrun brakes. Reference numeral 3 denotes the pole of the caravan and reference numeral 4 a control cabinet.

Fig. 2 shows a detail of the pole 3 in top view. It consists of the pole parts 5 and 6. Part 5 is designed to be positioned on the sphere of a towing hook, while part 6 is connected to the chassis of the caravan 1. These parts can be displaced relative to one another and, in the unloaded state, are pushed apart by means of a spring in the direction of arrow 28. If the towing vehicle carries out a braking operation, the mass of the caravan 1 will move part 6 towards part 5, counter to the pressure of the spring.

An overrun brake is embodied in such a manner that a tensile force is exerted when part 6 is moved towards part 5 on brake rod 7. This tensile force is distributed over brake cables 9 via cross beam 8, with each brake cable 9 leading to a wheel 2.

According to the present invention, a brake operating mechanism is provided which is denoted overall by reference numeral 30. This brake operating mechanism comprises an actuator 10, a part 26 of which is fixedly connected to the chassis of the trailer. The other part 11 which is displaceable relative thereto comprises a rod which is provided with a ring 27 at its end, which ring 27 is arranged around brake rod 7 and can strike against a ring 31 which is fixedly (adjustably) connected to the brake rod 7. If the actuator rod 11 moves outwards, the brake rod 7 will be moved in the direction of arrow 28. If, for any reason, actuator rod 11 does not move during a braking operation, the brake rod 7 will be operated in a conventional manner by displacement of the parts 5 and 6 with respect to one another. Actuator rod 11 is driven into the non-braking position, i.e. inwards, by a strong spring 33.

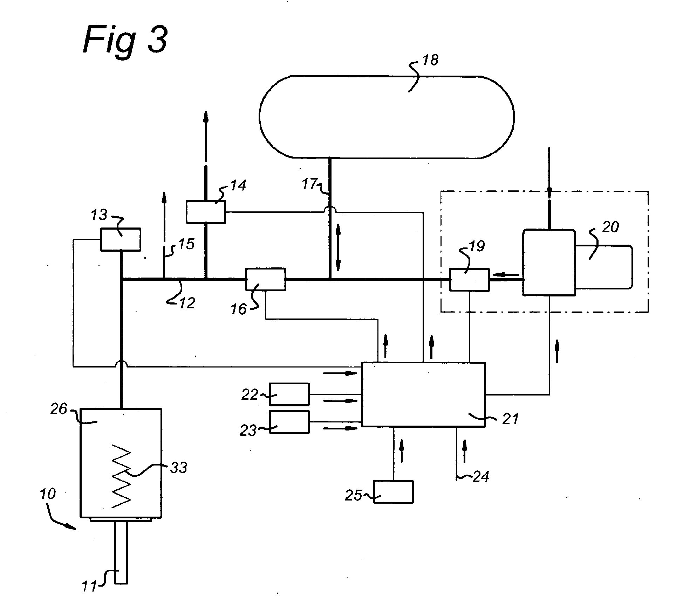

Details of the operation of actuator 10 are illustrated in Figure 3. The construction shown in Fig. 3 is preferably accommodated in cabinet 4. This construction comprises a control unit 21 which is supplied with power at the vehicle voltage which is present on cable 24. In addition, a buffer store tank or air tank 18 is present. A pump 20 controlled by the control unit 21 is provided which pumps air which is pressurized via duct 17 into buffer store 18. A sensor 19 is present in this duct and when a certain pressure is reached, the pump 20 is switched off, whereas the pump 20 is switched back on again when the pressure falls below a certain value measured by sensor 19.

Control unit 21 also controls the switching on, that is to say switching into the open position, of a brake valve 16. This brake valve 16 is embodied as a valve which is normally closed. In addition, the control unit controls a valve 14 which is positioned in the duct 12 downstream of brake valve 16, which is designed as a valve which is normally open. By operating control unit 21, the latter is closed. Duct 12 additionally has a throttle opening 15. In addition, a pressure sensor 13 is present, the signal of which is also supplied to control unit 21.

A brake light signal branch line is denoted by reference numeral 25. Reference numeral 23 denotes a displacement sensor which registers the movement between the pole parts 5 and 6, whereas reference numeral 22 denotes a G sensor.

The device described above operates as follows:
If a signal is delivered by one or more of the sensors 22, 23, 25, the control unit 21 will open brake valve 16 and close the additional valve 14. As pump 20 has previously built up pressure in buffer store 18, an extremely large force will be applied to actuator rod 11 particularly quickly at a relatively low pressure, by means of which the brake rod 7 is operated and thus the brakes are operated. During this operation, a part of the pumped fluid, such as air, will escape through the throttle opening 15. However, the capacity of the buffer store tank 18 is so great that this will have no effect during initial braking.

When a brake signal is no longer present, valve 16 will be closed and valve 14 will be opened again, as a result of which actuator rod 11 will move back, since there is the relatively strong spring 33 arranged in the actuator 10 which forces the rod 11 back. Due to the extremely large energy impulse coming from buffer store 18, it is very easy to overcome the spring force of this strong spring.

If, due to failure, valve 14 does not open upon operation of the brake, this has no effect as the air pressure escapes via opening 15. If, due to failure, brake valve 16 no longer closes and valve 14 does not open, the brake will be operated. However, this operation is only temporary as, despite the fact that the pump 20 starts when the pressure in duct 17 is reduced, ultimately insufficient pressure will be built up in the actuator 10 to apply a braking force, as the leakage through throttle opening 15 is greater than the effective capacity of pump 20. This means that buffer store 18 gradually empties.

The above-described system ensures under all circumstances that ultimately no brake pressure remains, which means that it is impossible for a situation to arise where the brake operating mechanism continually operates the brakes of the trailer, with all the negative results this entails.

It will be understood that one or more of the components described above may be omitted without compromising the safety of the system. Thus, it is possible to omit the throttle opening or the additional valve. These and other modifications will be immediately obvious to those skilled in the art and are within the scope of the attached claims.

## Claims

1. Brake operating mechanism for operating a brake, comprising an actuator (10) having two parts (11, 26) which can be displaced relative to one another, wherein a first part (26) is provided with first attachment means for attachment to a trailer (1) and the second part (11) is provided with attachment means for attachment to a control mechanism of a brake, a power supply (12) for said actuator, a control unit (21) for controlling the power supply to the actuator, and a brake sensor (22, 23, 25) for detecting a braking movement, said brake sensor being connected to said control unit (2 1 ), said power supply comprising a pressurized fluid, a buffer store (18) and a pump (20) being present for said fluid, said actuator being fluid-operated and embodied such that it assumes a non-operative position when there is no fluid pressure, a fluid duct (12) extending between said actuator and said buffer store in which a valve (16) is present which is controlled by said control unit, **characterized in that** a throttle opening (15) is provided in said duct downstream of said valve (16), said throttle opening (15) having a greater drain capacity than the pump capacity of said pump (20), said throttle opening (15) allowing pressure between said valve (16) and said actuator (10) to escape to the atmosphere when the brake valve (16) is operated for braking.

2. Brake operating mechanism according to claim 1, wherein said fluid comprises air.

3. Brake operating mechanism according to one of the preceding claims, wherein said control valve (16) is closed in the non-driven state.

4. Brake operating mechanism according to one of the preceding claims, wherein an additional valve (14) is provided in said duct, downstream of said control valve, which additional valve (14) is open to the atmosphere in the non-controlled state and which is closed when said actuator is operated.

5. Brake operating mechanism according to one of the preceding claims, wherein said attachment means for attachment to an operating mechanism for a brake comprise a ring (27).

6. Brake operating mechanism according to one of the preceding claims, wherein said brake sensor (22) comprises a G sensor.

7. Brake operating mechanism according to one of the preceding claims, wherein said brake sensor (23) comprises a displacement sensor.

8. Trailer (1) comprising a pole (3) having two parts (5, 6) which can be displaced relative to one another, between said parts an operating mechanism for an overrun brake extends, wherein said operating mechanism comprises an elongate part (7) which can be displaced relative to the chassis of said trailer as well as a brake operating mechanism according to one of the preceding claims, wherein said attachment means of said second part (11) engage on said elongate part (7).

## Patentansprüche

1. Bremsenbetätigungsmechanismus zum Betätigen einer Bremse, umfassend einen Antrieb (10) mit zwei Teilen (11, 26), die relativ zueinander verlagerbar sind, wobei ein erstes Teil (26) mit ersten Befestigungsmitteln zum Befestigen an einem Anhänger (1) versehen ist und das zweite Teil (11) mit Befestigungsmitteln zum Befestigen an einem Steuermechanismus einer Bremse versehen ist, eine Energieversorgung (12) für den Antrieb, eine Steuereinheit (21) zum Steuern der Energieversorgung an den Antrieb und einen Bremssensor (22, 23, 25) zum Erkennen einer Bremsbewegung, wobei der Bremssensor mit der Steuereinheit (21) verbunden ist, wobei die Energieversorgung ein druckbeaufschlagtes Fluid, einen Pufferspeicher (18) und eine Pumpe (20), die für das Fluid vorhanden ist, umfasst, wobei der Antrieb fluidbetrieben ist und derart ausgeführt ist, dass er eine Ruheposition einnimmt, wenn kein Fluiddruck vorhanden ist, wobei sich eine Fluidleitung (12) zwischen dem Antrieb und dem Pufferspeicher erstreckt, in der ein Ventil (16) vorhanden ist, das von der Steuereinheit gesteuert wird, **dadurch gekennzeichnet, dass** eine Drosselöffnung (15) stromabwärts von dem Ventil (16) in der Leitung vorgesehen ist, wobei die Drosselöffnung (15) eine größere Ablaufkapazität als die Pumpkapazität der Pumpe (20) aufweist, wobei die Drosselöffnung (15) ermöglicht, dass Druck zwischen dem Ventil (16) und dem Antrieb (10) in die Atmosphäre entweicht, wenn das Bremsventil (16) zum Bremsen betätigt wird.

2. Bremsenbetätigungsmechanismus nach Anspruch 1, wobei das Fluid Luft enthält.

3. Bremsenbetätigungsmechanismus nach einem der vorstehenden Ansprüche, wobei das Steuerventil (16) im nicht-angetriebenen Zustand geschlossen ist.

4. Bremsenbetätigungsmechanismus nach einem der vorstehenden Ansprüche, wobei in der Leitung ein zusätzliches Ventil (14) stromabwärts von dem Steuerventil vorgesehen ist, wobei das zusätzliche Ventil (14) im nicht-gesteuerten Zustand zur Atmosphäre offen ist und geschlossen ist, wenn der Antrieb betätigt wird.

5. Bremsenbetätigungsmechanismus nach einem der vorstehenden Ansprüche, wobei die Befestigungsmittel zum Befestigen an einem Betätigungsmechanismus für eine Bremse einen Ring (27) umfassen.

6. Bremsenbetätigungsmechanismus nach einem der vorstehenden Ansprüche, wobei der Bremssensor (22) einen G-Sensor umfasst.

7. Bremsenbetätigungsmechanismus nach einem der vorstehenden Ansprüche, wobei der Bremssensor (23) einen Verlagerungssensor umfasst.

8. Anhänger (1) umfassend eine Stange (3) mit zwei Teilen (5, 6), die relativ zueinander verlagerbar sind, wobei sich zwischen den Teilen ein Betätigungsmechanismus für eine Auflaufbremse erstreckt, wobei der Betätigungsmechanismus ein längliches Teil (7), das relativ zu dem Fahrgestell des Anhängers verlagerbar ist, sowie einen Bremsenbetätigungsmechanismus nach einem der vorstehenden Ansprüche umfasst, wobei die Befestigungsmittel des zweiten Teils (11) an dem länglichen Teil (7) in Eingriff treten.

## Revendications

1. Mécanisme d'actionnement de frein pour actionner un frein comportant un actionneur (10) ayant deux parties (11, 26) mobiles l'une par rapport à l'autre,
- la première partie (26) comportant des moyens de fixation pour être fixés à une remorque (1) et la seconde partie (11) comportant des moyens de fixation pour être fixée à un mécanisme de commande de frein,
- une alimentation (12) de l'actionneur,
- une unité de commande (21) pour commander l'alimentation de l'actionneur, et
- un détecteur de frein (22, 23, 25) pour détecter un mouvement de freinage,
- le détecteur de frein étant relié à l'unité de commande (21),
- l'alimentation en énergie comportant du fluide sous pression, un réservoir tampon (18) et une pompe (20) pour le fluide,
- l'actionneur fonctionnant avec du fluide et étant réalisé de façon à prendre une position neutralisée en l'absence de pression de fluide,
- une conduite de fluide (12) reliant l'actionneur et le réservoir tampon étant muni d'une vanne (16) commandée par l'unité de commande,
**caractérisé en ce qu'**
il comporte un orifice d'étranglement (15) dans la conduite en aval de la vanne (16), l'orifice d'étranglement (15) ayant une capacité de drainage supérieure à la capacité de la pompe (20), l'orifice d'étranglement (15) permettant à la pression régnant entre la vanne (16) et l'actionneur (10) de s'échapper à l'atmosphère lorsque la vanne de frein (16) fonctionne pour le freinage.

2. Mécanisme de commande de frein selon la revendication 1,
**caractérisé en ce que**
le fluide est de l'air.

3. Mécanisme de commande de frein selon les revendications précédentes,
**caractérisé en ce que**
la vanne de commande (16) est fermée en position de repos.

4. Mécanisme de commande de frein selon les revendications précédentes,
**caractérisé par**
une vanne supplémentaire (14) pour la conduite en aval de la vanne de commande, cette vanne supplémentaire (14) s'ouvrant à l'atmosphère en position de repos, et elle est fermée lorsque l'actionneur fonctionne.

5. Mécanisme de commande de frein selon les revendications précédentes,
**caractérisé par**
le moyen de fixation du mécanisme de fonctionnement du frein comporte un anneau (27).

6. Mécanisme de commande de frein selon les revendications précédentes,
**caractérisé en ce que**
le détecteur de frein (22) comporte un détecteur de gravité G.

7. Mécanisme de commande de frein selon les revendications précédentes,
**caractérisé en ce que**
le détecteur de frein (23) comporte un détecteur de déplacement.

8. Remorque (1) comportant un timon (3) ayant deux parties (5, 6) mobiles l'une par rapport à l'autre, avec un mécanisme de fonctionnement entre les parties pour un dépassement de course de frein, le mécanisme de travail comportant une pièce allongée (7) mobile par rapport au châssis de la remorque et un mécanisme de commande de frein selon les revendications précédentes, le moyen de fixation de la seconde pièce (11) coopérant avec la pièce allongée (7).
